Europäisches Patentamt

European Patent Office

Office européen des brevets

(19)

(11) Publication number : **0 475 704 A1**

# EUROPEAN PATENT APPLICATION

(12)

(21) Application number : **91308215.2**

(51) Int. Cl.⁵ : **H02P 7/00**

(22) Date of filing : **09.09.91**

(30) Priority : **10.09.90 US 580027**

(43) Date of publication of application :
**18.03.92 Bulletin 92/12**

(84) Designated Contracting States :
**DE FR GB**

(71) Applicant : **MOTOROLA INC.**
**1303 East Algonquin Road**
**Schaumburg Illinois 60196 (US)**

(72) Inventor : **Marvel, Dennis K.**
**958 Concord Drive**
**Island Lake, Illinois 60042 (US)**
Inventor : **Herrmann, John**
**131 Southport Road**
**Mundelein, Illinois 60060 (US)**
Inventor : **West, Rick**
**293 Oak**
**Glen Ellyn, Illinois 60137 (US)**

(74) Representative : **Lupton, Frederick et al**
**Motorola European Intellectual Property**
**Operations Jays Close Viables**
**Basingstoke, Hants RG22 4PD (GB)**

(54) **Drive circuit for an electric motor.**

(57) An electric motor drive circuit (2) having an H-bridge switch network with at least a first transistor (8) for connecting the electric motor between a supply potential ($V_{POWER}$) and earth to control the passage of current through the electric motor from the supply potential to earth in accordance with a control signal applied to a gate electrode (24, 26) of the first transistor, and having commutation protection circuitry (40) including : an inductance (14) coupled to carry current passing through the first transistor so as to produce a voltage representative of the rate of change of the current through the first transistor ; and a reduction transistor (42) having its base electrode coupled to the inductance and arranged to conduct charge away from the first transistor's gate electrode when the voltage produced at the inductance is greater than the turn-on threshold voltage of the reduction transistor.

EP 0 475 704 A1

## Background of the Invention

This invention relates to drive circuits for electric motors and particularly to those in which switches such as field effect transistors (FETs) are connected to control the path of current through the motor.

A typical example of a such a drive circuit is the well-known, so-called "H-bridge" drive circuit in which power FETs are connected to an electric motor in an "H" configuration to selectively control the path of current through the motor. It is known in such a drive circuit to utilize the FETs' inherent internal substrate diodes to provide flyback clamping. Such utilization is an attractive option for circuit designers, because of the obvious savings in cost and component count which it affords. However, the price that must be paid in such utilization is increased stress on the power transistors due to high peak recovery currents, accompanied by the generation of large amounts of recovered charge, that are characteristic of substrate diodes.

Such increased stress may be adequately handled in power transistors fabricated with precious-metal doping, whose internal diodes exhibit extremely fast recovery. However, such power transistors represent only a small minority of all the "energy management" power transistors commonly available (an "energy management" power transistor is one whose internal diode is rated for safe commutation at its full current and reverse voltage ratings). In the majority of cases the use of "energy management" power transistors for the sake of eliminating external diodes results in the penalty of increased dissipation accompanied by high levels of radiated and conducted emissions.

It is widely recognized that the two factors governing peak diode recovery current are (i) minority carrier lifetime and (ii) rate of change of commutating current or $\frac{di}{dt}$. The former is an inherent property of the device, and is therefore beyond the control of the circuit designer. A standard means of limiting $\frac{di}{dt}$ in FET systems is to place a resistor in series with each transistor gate, thereby limiting the rate at which the gate capacitance can charge and consequently limiting the rate at which the drain current can increase. This method is simple to implement and costs little, but suffers from a number of drawbacks.

One drawback arises from there being a considerable lot-to-lot variation in such MOSFET parameters as gate threshold voltage (typically -40% to +50%), forward transconductance (typically -50% to +300%), input capacitance (typically -30% to +50%) and feedback capacitance (typically -40% to +60%). In order to guarantee operation within a device's switching safe operating area during diode recovery, the circuit designer must select a gate resistor value according to the highest anticipated gain (over a range of temperature) and the smallest value of feedback capacitance. When device parameters move to opposite extremes, this choice results in excessively long switching times accompanied by unnecessarily high power dissipation.

Another drawback to the simple gate resistor scheme is that it produces a gate voltage having an exponential waveform: the slowing effect of the resistor is felt most strongly during the final rise of the gate voltage toward full turn-on, long after the catch diode has been fully commutated. This useless delay in reaching minimum ON resistance in the FET channel further increases power dissipation and hinders duty-cycle control at near-maximum motor speeds.

## Summary of the Invention

In accordance with the invention there is provided a drive circuit for an electric motor, the drive circuit comprising:

switch means including at least a first transistor for connecting the electric motor between a supply potential and a reference potential to control the passage of current through the electric motor from the supply potential to the reference potential in accordance with a control signal applied to a control electrode of the first transistor;

sensing means for sensing rate of change of current through the first transistor; and

regulating means responsive to the sensing means for regulating the control signal applied to the control electrode of the first transistor.

In a preferred form of the present invention the sensing means is an inductance coupled to carry current passing through the first transistor so as to produce a voltage representative of the rate of change of the current through the first transistor, and the regulating means is a reduction transistor having its base electrode coupled to the inductance and arranged to conduct charge away from the first transistor's control electrode when the voltage produced at the inductance is greater than the turn-on threshold voltage of the reduction transistor.

The resulting drive circuit contains simple, low-cost and efficient commutation protection circuitry which provides active, closed-loop feedback regulation of commutation current.

## Brief Description of the Drawings

One electric motor drive circuit in accordance with the present invention will now be described, by way of example only, with reference to the accompanying drawings, in which:

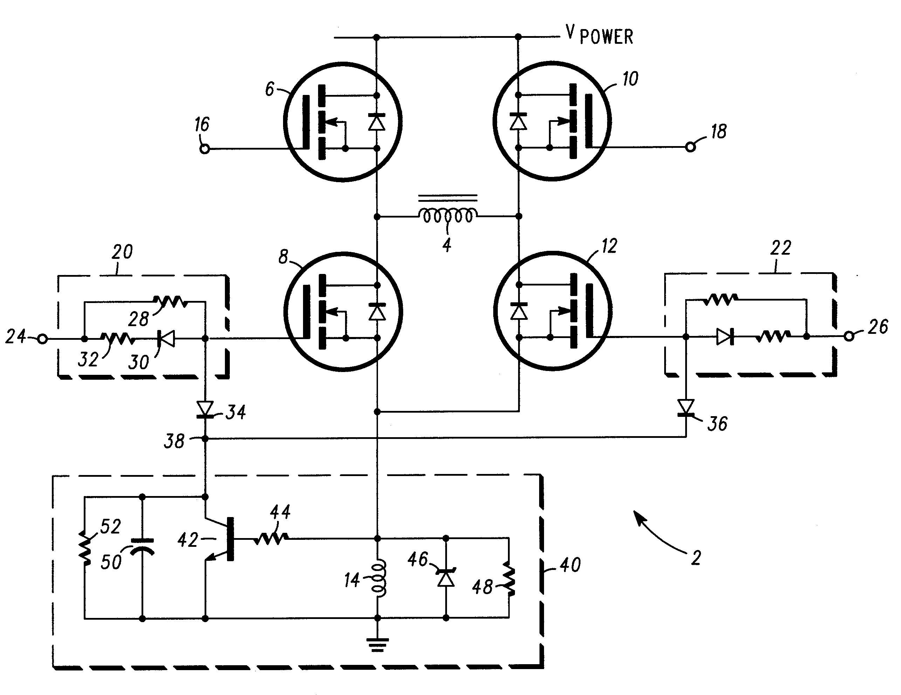

FIG. 1 shows a block-schematic circuit diagram of the drive circuit.

## Description of the Preferred Embodiment

Referring now to FIG. 1, a drive circuit 2 for an electric motor (whose single-phase winding 4 is shown) includes four FET power transistors 6, 8, 10 and 12. The FETs 6, 8, 10 and 12 are connected with the motor winding 4 in a conventional "H-bridge" configuration coupled between a supply line (e.g. at positive potential $V_{POWER}$) and earth.

As shown, the FETs 6, 8, 10 and 12 each have drain, source and gate electrodes and an intrinsic substrate diode. The high-side FETs 6 and 10 have their drain electrodes coupled to the $V_{POWER}$ supply line and have their source electrodes connected to opposite sides of the motor winding 4. The low-side FETs 8 and 12 have their drain electrodes coupled respectively to the source electrodes of the FETs 6 and 10, and have their source electrodes connected, via an inductor 14 which will be described more fully hereafter, to earth. The gate electrodes of the high-side FETs 6 and 10 are connected to respective control terminals 16 and 18. The low-side FETs 8 and 12 are connected, via respective current-limiting networks 20 and 22, to respective control terminals 24 and 26. The current-limiting networks 20 and 22 are identical and each made up of a resistor 28 connected in parallel with a series-connected diode 30 and resistor 32 pair. The gate electrodes of the low-side FETs 8 and 12 are also connected, via respective isolation diodes 34 and 36, to a node 38.

The drive circuit 2 also has a commutation protection network 40 including a bipolar npn transistor 42 and the inductor 14. The bipolar transistor 42 has its collector electrode connected to the node 38, and has its emitter electrode connected to earth. The inductor 14 has one end connected to earth and its other end connected, via a resistor 44, to the base of the bipolar transistor 42. A voltage-clamping Schottky diode 46 and resistor 48 are each connected in parallel with the inductor 14. A capacitor 50 and a resistor 52 are connected in parallel between the collector and emitter electrodes of the bipolar transistor 42.

In use of the drive circuit 2, the high-side FETs 6 and 10 are supplied at their control terminals 16 and 18 with signals from respective conventional high-side driver circuits (not shown). The low-side FETs 8 and 12 are supplied, via their current-limiting networks 20 and 22, at their control terminals 24 and 26 with signals from respective conventional low-impedance low-side driver circuits (not shown). As will be well understood, while no signals are applied to the FETs 8 and 10 at the control terminals 18 and 24 and the FETs remain non-conducting, signals are applied at the same time to the FETs 6 and 12 at the terminals 16 and 26 to render both of the FETs 6 and 12 conducting and so to cause current to flow through the motor winding 4 from left to right as seen in FIG. 1 and so to energize the motor in one direction. Alternatively, while no signals are applied to the FETs 6 and 12 at the control terminals 16 and 26 and the FETs remain non-conducting, signals are applied at the same time to the FETs 8 and 10 at the terminals 24 and 18 to render both of the FETs 8 and 10 conducting and so to cause current to flow through the motor winding 4 from right to left as seen in FIG. 1 and so to energize the motor in the opposite direction.

As will be understood, in use of the circuit the intrinsic diodes of the high-side FETs 6 and 10 must be commutated during switching of the low-side FETs 8 and 12. This is achieved in the driver circuit 2 by the commutation protection network 40 sensing the rate of increase of current in the relevant low-side transistor 8 or 12 and regulating the flow of charge to the gate electrode of the relevant low-side FET 8 or 12 accordingly.

The commutation protection network 40 acts as follows. When the current through the low-side FET 8 or 12 changes, a voltage proportional to the current's rate of change $\dfrac{di}{dt}$ is developed across the inductor 14 and is applied through the resistor 44 to the base of the bipolar transistor 42. When this applied voltage is greater than the turn-on threshold voltage $V_{be}$ of the bipolar transistor 42, the transistor begins to conduct charge away, through the relevant diode 34 or 36, from the relevant low-side FET 8 or 12, thus reducing the conduction of the relevant low-side FET and so reducing the rate of change of current $\dfrac{di}{dt}$. It will be appreciated that the inductor 14 and the bipolar transistor 42 form, with the relevant low-side FET 8 or 12, a closed feedback loop which senses and regulates the rate of change of current $\dfrac{di}{dt}$ carried by the relevant low-side FET in order to provide commutation protection for the substrate diode in the relevant high-side FET 6 or 10, and switching safe operating area (SOA) protection for the regulated low-side FET 8 or 12.

In a practical implementation of the preferred embodiment the transistor 42 is a low-cost bipolar npn transistor having a substantial RF bandwidth, the inductor 14 has a low value of typically less than 100nH (and so may be formed simply by a conductor loop on a printed circuit board), and the component values are chosen so that drain current slew rate in the low-side FETs is regulated to a value that produces approximately 0.75V (typically the turn-on threshold voltage $V_{be}$ of the bipolar transistor 42) across the inductor 14.

In practice this threshold value is maintained within a range of ±15%, providing a considerable improvement in accuracy over the simple gate resistor method of commutation protection described above in relation to the prior art.

Moreover, it will be appreciated that the commutation protection circuit 40 offers another advantage over the prior art described above, in that the circuit becomes inactive as soon as the drain current starts to rise at a slower rate than necessary to enable the bipolar transistor 42, thereby posing no obstacle to the rapid attainment of minimum channel resistance near the end of the switching event.

It will be appreciated that in each of the current-limiting networks 20, 22 the resistor 28 acts to limit the supply of gate charging current, and resistor 30 (gated by diode 32) acts to limit discharge current, in each respective low-side FET 8 or 12. It will also be appreciated that diodes 32 and 34 may conveniently be provided by the two sections of a single surface-mounted dual diode package.

It will also be appreciated that in the commutation protection circuit 40 the Schottky diode 46 acts to limit the reverse voltage across the inductor 14 during FET turn-off and to damp the gate-to-source ringing that follows the $T_b$ phase of diode recovery. It will also be appreciated that the resistor 48 limits the Q factor of the tank circuit formed by the inductor 14 and the various parasitic capacitances appearing across it. It will also be appreciated that the resistor 44 limits the instantaneous base current into the bipolar transistor 42 and contributes to the shaping of the open-loop frequency response. It will also be appreciated that the capacitor 50, together with the input capacitance of the relevant low-side FET 8 or 12 and the resistors in the gate circuit, determines the dominant pole required for closed-loop stability. It will be appreciated that the resistor 52 discharges the capacitor 50 when the low-side FET control signal is off.

In a practical implementation of the preferred embodiment the closed-loop bandwidth is typically 30MHz.

It will be appreciated that although commutation protection circuit 40 and the drive circuit 2 have been described with reference to a single-phase winding motor 4, the invention is equally applicable to poly-phase motor windings, and that all arms of the poly-phase bridge may be connected to a single commutation protection circuit as described above via respective additional gating diodes similar to the gating diodes 34 and 36.

It will be appreciated that various modifications or alternatives to the above described embodiment will be apparent to the man skilled in the art without departing from the inventive concept of sensing the rate of change of drive current and regulating the drive control signal accordingly.

## Claims

1. A drive circuit (2) for an electric motor, the drive circuit comprising:
   switch means including at least a first transistor (8) for connecting the electric motor between a supply potential and a reference potential to control the passage of current through the electric motor from the supply potential to the reference potential in accordance with a control signal applied to a control electrode of the first transistor;
   and characterized by:
   sensing means (14) for sensing rate of change of current through the first transistor; and
   regulating means (42) responsive to the sensing means for regulating the control signal applied to the control electrode of the first transistor.

2. A drive circuit according to claim 1 wherein the sensing means comprises an inductance coupled to produce a voltage representative of the rate of change of current through the first transistor.

3. A drive circuit according to claim 1 wherein the regulating means comprises reducing means for reducing the magnitude of the control signal when the rate of change of current sensed by the sensing means exceeds a predetermined value.

4. A drive circuit according to claim 3 wherein the reducing means comprises reduction transistor means having a first current electrode coupled to the control electrode of the first transistor, a second current electrode coupled to the reference potential and a control electrode coupled to the sensing means, whereby the reduction transistor means conducts charge from the control electrode of the first transistor to the reference potential when its control electrode receives a voltage greater than the turn-on threshold voltage of the reduction transistor means.

5. A drive circuit according to claim 4 wherein the reduction transistor means comprises a bipolar npn transistor having its collector electrode coupled to the control electrode of the first transistor, its emitter electrode coupled to the reference potential and its base electrode coupled to the sensing means.

6. A drive circuit according to claim 1 further comprising a second transistor (12) for connecting the electric motor between the supply potential and the reference potential to control the passage of current through the electric motor, in a different sense than that controlled by the first transistor, from the supply potential to the reference potential in accordance with a control signal applied to a control electrode of the second transistor, wherein the control electrodes of the first and second transistors are coupled to the reducing means by respective gating diodes (34, 36).

7. A drive circuit according to claim 1 wherein the switch means comprises an H-bridge.

8. A drive circuit according to claim 1 wherein the first transistor is a field effect transistor.

9. A drive circuit according to claim 1 further comprising diode means (46) coupled in parallel with the sensing means.

10. A drive circuit according to claim 1 further comprising a resistance (48) coupled in parallel with the sensing means.

11. A drive circuit according to claim 1 further comprising a capacitance (50) coupled in parallel with the reducing means.

12. A drive circuit according to claim 11 further comprising a resistance (52) coupled in parallel with the capacitance.

13. A drive circuit according to claim 1 further comprising a resistance (44) coupled between the sensing means and the reducing means.

**European Patent Office**

# EUROPEAN SEARCH REPORT

Application Number

EP 91 30 8215

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 360 645 (SONY CORP) <br> * figures 2,3 * <br> --- | 1,7 | H02P7/00 |
| A | ELECTRONIC ENGINEERING. <br> vol. 61, no. 745, January 1989, LONDON GB <br> pages 43 - 48; 'THE IR8200 MONOLITHIC DMOS H-BRIDGE POWER CONTROL IC' <br> * the whole document * <br> --- | 1,7 | |
| A | US-A-3 456 125 (M. COUSIN ET AL) <br> * column 2, line 14 - line 68; figure 1 * <br> --- | 1 | |
| A | GB-A-1 478 810 (STANDARD TELEPHONES AND CABLES LTD) <br> * figure 3 * <br> --- | 1 | |
| A | DD-C-132 621 (G. HORNIG) <br> * the whole document * <br> ----- | 1,7 | |
| | | | TECHNICAL FIELDS SEARCHED (Int. Cl.5) |
| | | | H02P <br> G01R <br> G05F <br> H02H |

The present search report has been drawn up for all claims

| Place of search | Date of completion of the search | Examiner |
|---|---|---|
| THE HAGUE | 15 JANUARY 1992 | BEYER F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)